# EUROPÄISCHE PATENTSCHRIFT

(11) **EP 1 256 410 B1**
(45) Veröffentlichungstag und Bekanntmachung des Hinweises auf die Patenterteilung: **23.10.2013**
(21) Anmeldenummer: 02009970.1
(22) Anmeldetag: 03.05.2002
(51) Int. Cl.: B23K 9/173, B23K 35/38

(54) **Tandemschweissschutzgas**
Shielding gas for welding with two electrodes
Gaz de protection pour le soudage au moyen de deux electrodes

(30) Priorität: 11.05.2001 DE 10122869
(43) Veröffentlichungstag der Anmeldung: 13.11.2002
(60) Teilanmeldung: 09008405.4
(73) Patentinhaber: Linde AG, 80331 München (DE)
(72) Erfinder: Miklos, Ernst, 82327 Tutzing (DE)
(74) Vertreter: Gellner, Bernd

(56) Entgegenhaltungen:
- EP-A- 0 544 187
- DE-A- 2 363 456
- GB-A- 1 517 097
- US-A- 4 749 841
- US-A- 5 667 702

## Beschreibung

Die Erfindung betrifft ein Schutzgas für das Metall-Schutzgasschweißen mit mehreren Drahtelektroden, insbesondere mit zwei Drahtelektroden.

Das Metall-Schutzgas-Schweißen (MSG) mit einer Elektrode ist ein genormtes Verfahren, dessen Eigenschaften unter den Kennzahlen 2430 nach Entwurf DIN ISO 857 oder 13 nach ISO 4063 beschrieben sind (siehe auch die WO-A-9745227).

Aus der Fachliteratur, z.B. der Zeitschrift "Der Praktiker" Heft 1, 2000, Seiten 18 und 19 sind zwei Metall-Schutzgasschweißverfahren mit mehreren Drahtelektroden bekannt. Das Metallschutzgas-Doppeldrahtverfahren ist ein Einkopf-Schweiß-Verfahren mit zwei Elektroden unter Schutzgas und einer gemeinsamen Spannungsquelle. Das gleichzeitige Abschmelzen der beiden Drahtelektroden führt zu höheren Abschmelzleistungen und Schweißgeschwindigkeiten verglichen mit dem Eindrahtprozess. Dies ermöglicht eine Steigerung der Produktivität. Das andere Verfahren ist das sogenannte Tandem-Schweißverfahren mit zwei getrennten Potentialen. Dieses bietet eine bessere Kontrolle des Prozesses. Beim Tandemschweißen können, je nach Aufgabe, zusätzliche Kombinationen von verschiedenen Lichtbögen eingestellt werden. In dem DVS-Merkblatt 0909-1 sind die Begriffe definiert und erläutert.

Die Verfahren des Schweißens und des Lötens mit Lichtbogen unter Schutzgas unterscheiden sich folgendermaßen: Beim Schweißen entsteht ein Schweißbad aus aufgeschmolzenem Werkstoff und - sofern verwendet - aus dem Schweißdraht bzw. den Schweißdrähten. Beim Metall-Schutzgas-Löten schmilzt der Werkstoff hingegen nicht oder nur geringfügig auf. Die beiden Verfahren ähneln sich in vielen Punkten jedoch treten auch spezielle, verfahrensspezifische Probleme auf.

Die räumliche Nähe der zwei Lichtbögen führt zu einer gegenseitigen Beeinflussung. Es wirken elektrische und elektromagnetische Felder und Kräfte, die den Metallübergang im Lichtbogen beeinflussen. Diese Kräfte führen bei nicht optimal ausgewählten Parametern zu Prozessunruhen, Spritzerauswurf und im Extremfall zu Nahtfehlern.

Derzeit versucht man diese Probleme über Drahtabstand, Kontaktrohrabstand oder Impulsparameter in Griff zu bekommen.

Aufgabe der Erfindung ist es, ein Schweißschutzgas und ein Lötschutzgas vorzuschlagen, das diese Probleme verhindert oder verringert.

Diese Aufgabe wird erfindungsgemäß gelöst von einem Schutzgas mit den Merkmalen des Anspruchs 1.

Die erfindungsgemäße Beimischung von Helium in das Schutzgas führt zu einer Lichtbogenstraffung und verringert die obengenannten elektromagnetischen Kräfte und deren Auswirkungen. Helium ersetzt überwiegend Argon; das höhere lonisationspotential von Helium gegenüber dem von Argon bewirkt eine bessere Lichtbogenstabilität. Helium wirkt also wie ein elektrischer Widerstand. Durch das höhere lonisationspotential verringert sich das Volumen an ionisiertem Gas, welches die beiden Lichtbögen umgibt. Darüber hinaus bewirkt Helium bei einer konstanten Spannung einen kürzeren Lichtbogen. Bei einem kurzen Lichtbogen verkürzt sich der Weg, welcher der Tropfen von der abschmelzenden Elektrode zum Schmelzbad zurücklegen muss. Da auf dieser Strecke aber die Gefahr besteht, dass der Tropfen von den Feldkräften, die der zweite Lichtbogen verursacht, aus seiner Bahn gebracht wird und als Spritzer auf der Werkstückoberfläche oder der Naht landet, verringert Helium das Entstehen von Spritzern wirkungsvoll.

Bisher wurden für das MAG-Schweißen von Stählen wie z.B. Baustählen und hochlegierten Werkstoffen (legierte Stähle und Nickelbasiswerkstoffe) Zweikomponentengemische aus Argon und CO₂ oder Argon und O₂ empfohlen. CO₂ bewirkt zwar in gewissem Maße auch eine Lichtbogenstraffung, kann aber nicht beliebig zugemischt werden, da es in größeren Mengen die Tropfenablösung erschwert und stark oxidiert. Das erfindungsgemäß vorgeschlagene Helium ist dagegen inert.

Für unlegierte Stähle hat sich ein Heliumanteil zwischen 15 % und 75 % als besonders vorteilhaft erwiesen. Der Heliumanteil sowie der CO₂-Anteil, welcher im Bereich von 2 % bis 20 % liegt, bzw. der O₂-Anteil, welcher zwischen 1 % und 6 % beträgt, bewirken gutes Nahtaussehen und qualitativ hochwertige Verbindungen bei hohen Schweiß- bzw. Lötgeschwindigkeiten.

Die Erfindung bietet folgende Vorteile:
- erhöhte Prozessstabilität
- Spritzerreduzierung
- Herabsetzen der Störungsempfindlichkeit des Prozesses
- bessere Nahtform durch besseres Nahtanfließen
- Reduzierung der Oxidation beim MAG
- Reduzierung der Poren beim MIG
- besserer Einbrand beim MIG.

Hauptanwender der Technologie sind der Fahrzeugbau, der Automobilbau, der Schienenbau und Zuliefererbetriebe sowie der Maschinen- und Behälterbau.

## Patentansprüche

1. Verwendung eines Schutzgases mit folgenden Komponenten zum Metallschutzgasschweißen oder Metallschutzgaslöten unlegierter Stähle mit zwei oder mehreren Drahtelektroden mit unterschiedlichen Potentialen in einer Gasdüse und mit einem gemeinsamen Schmelzbad:
CO₂: 2% - 20 %
CO₂: 2% - 20 %
He: 15 % bis 75 %, bevorzugt 20 % - 50 %
Ar: Rest

## Claims

1. Use of a shielding gas comprising the components below for the metal shielding gas welding or metal shielding gas soldering of unalloyed steels with two or more wire electrodes at different potentials in a gas nozzle and with a common molten bath:
CO₂: 2% - 20%,
He: 15% to 75%, preferably 20% - 50%,
Ar: remainder.

## Revendications

1. Utilisation d'un gaz de protection présentant les composants suivants, pour le soudage sous gaz protecteur avec métal d'apport ou le brasage sous gaz protecteur avec métal d'apport d'aciers non alliés au moyen de deux ou plusieurs fils-électrodes avec des potentiels différents dans une tuyère à gaz et avec un bain de fusion commun:
CO₂ : 2 % - 20 %
He : 15 % à 75 %, de préférence 20 % - 50 %
Ar : reste.
